# EUROPEAN PATENT SPECIFICATION

(11) **EP 2 193 476 B1**
(45) Date of publication and mention of the grant of the patent: **06.03.2013**
(21) Application number: 08833156.6
(22) Date of filing: 18.09.2008
(51) Int. Cl.: G06K 7/10

(54) **IMAGING READER WITH ASYMMETRICAL MAGNIFICATION**
ABBILDUNGSLESEGERÄT MIT ASYMMETRISCHER VERGRÖSSERUNG
LECTEUR D'IMAGE AVEC AGRANDISSEMENT ASYMÉTRIQUE

(30) Priority: 28.09.2007 US 906089
(43) Date of publication of application: 09.06.2010
(73) Proprietor: Symbol Technologies, Inc., Holtsville, NY 11742-1300 (US)
(72) Inventor: VINOGRADOV, Igor, New York New York 10001 (US); BARKAN, Edward, Miller Place New York 11764 (US); DRZYMALA, Mark, Commack New York 11725 (US); TSI-SHI, David, Stony Brook New York 11790 (US)
(74) Representative: Kopf, Korbinian Paul
(86) International application number: PCT/US2008/076832
(87) International publication number: WO 2009/042492

(56) References cited:
- US-A- 6 042 012
- US-A1- 2002 163 739
- US-A1- 2006 022 051
- US-A1- 2006 124 745

## Description

### BACKGROUND OF THE INVENTION

Flat bed laser readers, also known as horizontal slot scanners, have been used to electro-optically read one-dimensional bar code symbols, particularly of the Universal Product Code (UPC) type, at a point-of-transaction workstation in supermarkets, warehouse clubs, department stores, and other kinds of retailers for many years. As exemplified by U.S. Patent No. 5,059,779; No. 5,124,539 and No. 5,200,599, a single, horizontal window is set flush with, and built into, a horizontal countertop of the workstation. Products to be purchased bear an identifying symbol and are typically slid across the horizontal window through which a multitude of scan lines is projected in a generally upwards direction. When at least one of the scan lines sweeps over a symbol associated with a product, the symbol is processed and read.

The multitude of scan lines is generated by a scan pattern generator which includes a laser for emitting a laser beam at a mirrored component mounted on a shaft for rotation by a motor about an axis. A plurality of stationary mirrors is arranged about the axis. As the mirrored component turns, the laser beam is successively reflected onto the stationary mirrors for reflection therefrom through the horizontal window as a scan pattern of the scan lines.

It is also known to provide a point-of-transaction workstation not only with a generally horizontal window, but also with a generally upright window that faces an operator at the workstation. The generally upright window is oriented generally perpendicularly to the horizontal window, or is slightly rearwardly or forwardly inclined. The laser scan pattern generator within this dual window or bi-optical workstation also projects the multitude of scan lines in a generally outward direction through the upright window toward the operator. The generator for the upright window can be the same as or different from the generator for the horizontal window. The operator slides the products past either window from right to left, or from left to right, in a "swipe" mode. Alternatively, the operator merely presents the symbol on the product to a central region of either window in a "presentation" mode. The choice depends on operator preference or on the layout of the workstation.

Sometimes, the upright window is not built into the workstation as a permanent installation. Instead, a vertical slot scanner is configured as a portable reader that is placed on the countertop of an existing horizontal slot scanner in a hands-free mode of operation. In the frequent event that large, heavy, or bulky products, that cannot easily be brought to the reader, have symbols that are required to be read, then the operator may also manually grasp the portable reader and lift it off, and remove it from, the countertop for reading the symbols in a handheld mode of operation.

Each product must be oriented by the operator with the symbol facing away from the operator and generally towards either window of the bi-optical workstation. Hence, the operator cannot see exactly where the symbol is during scanning. In typical "blind-aiming" usage, it is not uncommon for the operator to repeatedly swipe or present a single symbol several times before the symbol is successfully read, thereby slowing down transaction processing and reducing productivity.

The blind-aiming of the symbol is made more difficult because the position and orientation of the symbol are variable. The symbol may be located low or high, or right to left, on the product, or anywhere in between, or on any of six sides of a box-shaped product. The symbol may be oriented in a "picket fence" orientation in which the elongated parallel bars of the one-dimensional UPC symbol are vertical, or in a "ladder" orientation in which the symbol bars are horizontal, or at any orientation angle in between.

In such an environment, it is important that the laser scan lines located at, and projected from, either window provide a full coverage scan zone which extends down as close as possible to the countertop, and as high as possible above the countertop, and as wide as possible across the width of the countertop. The scan patterns projected into space in front of the windows grow rapidly in order to cover areas on products that are positioned not on the windows, but several inches therefrom. The scan zone must include scan lines oriented to read symbols positioned in any possible way across the entire volume of the scan zone.

As advantageous as these laser-based, point-of-transaction workstations are in processing transactions involving products associated with one-dimensional symbols each having a row of bars and spaces spaced apart along one direction, the workstations cannot process stacked symbols, such as Code 49 which introduced the concept of vertically stacking a plurality of rows of bar and space patterns in a single symbol, as described in U.S. Patent No. 4,794,239, or PDF417 which increased the amount of data that could be represented or stored on a given amount of surface area, as described in U.S. Patent No. 5,304,786, or two-dimensional symbols.

Both one- and two-dimensional symbols, as well as stacked symbols, can also be read by employing solid-state imagers which have a one- or two-dimensional array of pixels, cells or photosensors that correspond to image elements or pixels in a field of view (FOV) of the imager. Such an imager may include a one- or two-dimensional charge coupled device (CCD) or a complementary metal oxide semiconductor (CMOS) device, as well as imaging optics and associated circuits for producing electronic signals corresponding to the one- or two-dimensional array of pixel information over the field of view.

It is therefore known to use a solid-state imager for capturing a monochrome image of a symbol as, for example, disclosed in U.S. Patent No. 5,703,349. It is also known to use a solid-state imager with multiple buried channels for capturing a full color image of a target as, for example, disclosed in U.S. Patent No. 4,613,895. It is common to provide a two-dimensional CCD with a 640 x 480 resolution commonly found in VGA monitors, although other resolution sizes are possible.

It is also known to install the solid-state imager, analogous to that conventionally used in a consumer digital camera, in a bi-optical, point-of-transaction workstation, as disclosed in U.S. Patent No. 7,191,947 in which the dual use of both the solid-state imager and the laser scan pattern generator in the same workstation is disclosed. It is possible to replace all of the laser scan pattern generators with solid-state imagers in order to improve reliability and to enable the reading of two-dimensional and stacked symbols, as well as other targets.

It is desirable to have the FOV of the imager large at a near working distance or a close proximity to either window of the workstation so that the FOV covers the entire symbol. At further working distances, it is preferred to have the FOV diverge slowly. As advantageous as the use of imagers are, the range of working distances or ability to read symbols by the imager is limited by the imaging optics and by the number of pixels in, or resolution of, the imager. A ratio between the smallest imaged bar/space area, or module, of the symbol to the number of pixels on which the bar/space area is projected at the imager, that is, the number of pixels covered by the bar/space area, is known as "pixels per module" or PPM. When the FOV diverges rapidly, the PPM decreases rapidly too, which, in some cases, limits the capability of the imager to decode and read symbols at far working distances.

In cases when the symbol is tilted in a particular direction at a substantial imaging angle, for example, 45 degrees, to the imager, such as in the bi-optical workstation described above, the PPM is further reduced as a function of the cosine of the imaging angle due to the projection effect. Also, the tilted symbol appears to look denser than it actually is. It is desirable to increase the PPM in that particular direction to compensate for the loss of the PPM, the reduced resolution, the apparent increased density, and the decreased capability to decode and read such tilted symbols.
US6042012 A describes a method and apparatus for reading bar codes or other images while reducing or eliminating the need for self-generated illumination.
US2002163739 A1 describes an imaging lens is used in image reading and adapted to image information of an original on a reading device. In the imaging lens at least one surface out of a plurality of surfaces forming the imaging lens has refracting power rotationally asymmetric with respect to the optical axis.
US2006124745 A1 describes an optical system and method for data reading. A preferred system is directed to a scanner which includes a laser diode and a beam splitter for generating first optical beam and a second optical beam, the first optical beam being directed toward one side of a scanning optical element such as a rotating polygon mirror and to a first mirror array, the second optical beam being simultaneously directed toward a second optical element such as another side of the rotating polygon mirror and then to a second and a third mirror array.
US-A-2006/022051 is achnowledged in the preamble of claim 1 and 7.

### SUMMARY OF THE INVENTION

This desire, inter alia, is met by the subject-matter of the independent claims.

One feature of this invention resides, briefly stated, in a reader for, and a method of, electro-optically reading indicia, comprising a housing and at least one solid-state imager, and preferably a plurality of solid-state imagers, within the housing. Each imager is operative for capturing light from the indicia along an optical axis over a field of view. Each imager preferably comprises a two-dimensional, charge coupled device (CCD) array, preferably, but not necessarily, of submegapixel size, e.g., 752 pixels wide x 480 pixels high, in order to reduce the costs of the imagers, as compared to supermegapixel arrays. Each imager includes an illuminator for illuminating the indicia with illumination light from illumination light sources, e.g., light emitting diodes (LEDs). A controller is operative for controlling each illuminator to illuminate the indicia, for controlling each imager to capture the illumination light returning from the indicia over an exposure time period to produce electrical signals indicative of the indicia being read, and for processing the electrical signals to read the indicia. Each illuminator is only operative during the exposure time period. Each imager is controlled to capture the light from the indicia during different exposure time periods to avoid mutual interference among the illuminators.

In accordance with one aspect of this invention, an optical converter is provided in the housing, preferably in conjunction with an imaging lens, for optically modifying and asymmetrically magnifying the field of view of at least one of the imagers along mutually orthogonal directions generally perpendicular to the optical axis of the one imager, and for increasing resolution of the one imager along one of said directions. Thus, if the magnification is reduced along the one direction, then there will be more pixels in a given area, a higher PPM, and, as a result, the resolution of the imager will be increased along the one direction. The optical converter with asymmetrical magnification improves the resolution of the imager, especially in those cases where the indicia being read is imaged at a steep, oblique angle. Asymmetrical magnification compensates for any loss in imager resolution due to the projection effect caused by such a steep, oblique angle.

In a preferred embodiment, the optical converter comprises non-rotationally symmetrical optics for optically modifying the field of view differently along said mutually orthogonal directions. The non-rotationally symmetrical optics advantageously include at least one of a toroidal lens, a cylindrical lens, an aspherical toroidal lens, a toroidal mirror, a cylindrical mirror, and an aspherical toroidal mirror. If a pair of lenses is employed, then the lenses are preferably provided with respective positive and negative optical powers. At least one of the lenses is preferably made of a plastic material that filters visible light in a predetermined frequency range, e.g., red light, and corrects for chromatic aberration of visible light in a different frequency range, e.g., blue and green light.

In a preferred embodiment, the housing has one window located in a generally horizontal plane, and another window located in a generally upright plane that intersects the generally horizontal plane, thereby comprising a bi-optical workstation. The imagers capture the light from the indicia through at least one of the windows, and preferably each imager has its own window. The optical axes of multiple imagers intersect, as do their fields of view. Indicia can thus be reliably read when located anywhere at a respective window, as well as within a range of working distances therefrom, and can even be tilted at steep angles relative to the windows.

In accordance with another feature of this invention, the method of electro-optically reading indicia is performed by capturing light from the indicia with a solid-state imager along an optical axis over a field of view; controlling the imager to produce an electrical signal indicative of the indicia being read, and processing the electrical signal to read the indicia; and optically modifying and asymmetrically magnifying the field of view along mutually orthogonal directions generally perpendicular to the optical axis, and increasing resolution of the imager along one of said directions.

The method includes focusing the light from the indicia onto the imager with an imaging lens. The field of view is magnified differently along said mutually orthogonal directions, for example, by using such non-rotationally symmetrical optics as at least one of a toroidal lens, a cylindrical lens, an aspherical toroidal lens, a toroidal mirror, a cylindrical mirror, and an aspherical toroidal mirror.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF THE DRAWINGS

FIG. 1 is a perspective view of a dual window, bi-optical, point-of-transaction workstation or reader operative for reading indicia in accordance with this invention;

FIG. 2 is a part-sectional, part-diagrammatic, schematic view of a workstation analogous to that shown in FIG. 1;

FIG. 3 is a view of representative pixels of an image in a rotationally symmetrical field of view in accordance with the prior art;

FIG. 4 is a view similar to FIG. 3 but with the field of view modified by asymmetrical magnification in accordance with this invention;

FIG. 5 is a perspective view of one embodiment of non-rotationally symmetrical optics for asymmetrically modifying the field of view in accordance with this invention; and

FIG. 6 is a perspective view of another embodiment of non-rotationally symmetrical optics for asymmetrically modifying the field of view in accordance with this invention.

### DETAILED DESCRIPTION OF THE PREFERRED EMBODIMENTS

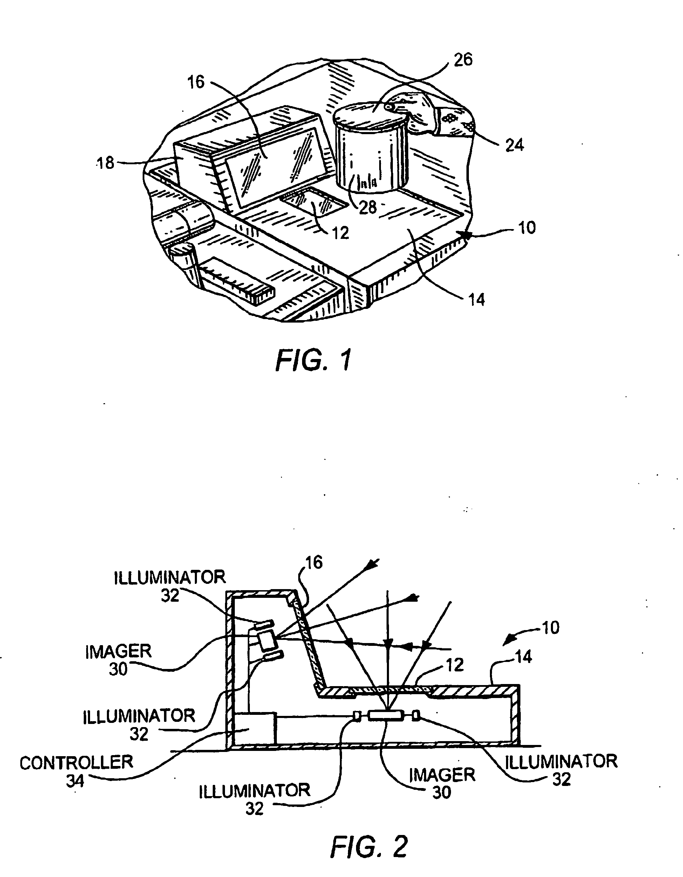

FIG. 1 depicts a dual window, bi-optical, point-of-transaction workstation 10 used by retailers to process transactions involving the purchase of products bearing an identifying target, such as the UPC symbol described above. Workstation 10 has a generally horizontal window 12 set flush with, or recessed into, a countertop 14, and a vertical or generally vertical (referred to as "vertical" or "upright" hereinafter) window 16 set flush with, or recessed into, a raised housing portion 18 above the countertop.

As schematically shown in FIG. 2, a plurality of solid-state imagers 30, each including an illuminator 32, are also mounted at the workstation, for capturing light passing through either or both windows from a target which can be a one- or two-dimensional symbol, such as a two-dimensional symbol on a driver's license, or any document, as described below. Each imager 30 is a solid-state area array, preferably a CCD or CMOS array, preferably of submegapixel size. Each imager 30 preferably has a global shutter, as described below. Each illuminator 32 is preferably one or more light sources, e.g., surface-mounted, light emitting diodes (LEDs), located at each imager 30 to uniformly illuminate the target, as further described below.

In use, an operator 24, such as a person working at a supermarket checkout counter, processes a product 26 bearing a UPC symbol 28 thereon, past the windows 12, 16 by swiping the product across a respective window in the abovementioned swipe mode, or by presenting the product at the respective window in the abovementioned presentation mode. The symbol 28 may located on any of the top, bottom, right, left, front and rear, sides of the product, and at least one, if not more, of the imagers 30 will capture the illumination light reflected, scattered, or otherwise returning from the symbol through one or both windows. The imagers are preferably looking through the windows at the symbol that is oriented at around 45 degrees so that the imagers can each see a side of the product that is generally perpendicular to, as well as generally parallel to, a respective window.

As also schematically shown in FIG. 2, the imagers 30 and their associated illuminators 32 are operatively connected to a programmed microprocessor or controller 34 operative for controlling the operation of these and other components. Preferably, the microprocessor is the same as the one used for decoding the return light scattered from the target and for processing the captured target images.

In operation, the microprocessor 34 sends successive command signals to the illuminators 32 to pulse the LEDs for a short time period of 100 microseconds or less, and successively energizes the imagers 30 to collect light from a target only during said time period, also known as the exposure time period. By acquiring a target image during this brief time period, the image of the target is not excessively blurred even in the presence of relative motion between the imagers and the target.

There are several different types of targets that have particular utility for the enhancement of the operation of the workstation. The target may be a personal check, a credit card, or a debit card presented by a customer for payment of the products being purchased. The operator need only swipe or present these payment targets at one of the windows for image capture.

The target may also be a signature, a driver's license, or the consumer himself or herself. Capturing an image of the driver's license is particularly useful since many licenses are encoded with two-dimensional indicia bearing age information, which is useful in validating a customer's age and the customer's ability to purchase age-related products, such as alcoholic beverages or tobacco products.

The target may be the operator himself or herself, which is used for video surveillance for security purposes. Thus, it can be determined if the operator is actually scanning the products, or passing them around the window in an effort to bypass the window and not charge the customer in a criminal practice known in retailing as "sweethearting".

The target may, of course, be a two-dimensional symbol whose use is becoming more widespread, especially in manufacturing environments and in package delivery. Sometimes, the target includes various lengths of truncated symbols of the type frequently found on frequent shopper cards, coupons, loyalty cards, in which case the area imagers can read these additional symbols.

The energization of the imagers 30 can be manual and initiated by the operator. For example, the operator can depress a button, or a foot pedal, at the workstation. The energization can also be automatic such that the imagers operate in a continuous image acquisition mode, which is the desired mode for video surveillance of the operator, as well as for decoding two-dimensional symbols. In the preferred embodiment, all the imagers will be continuously sequentially energized for scanning symbols until such time as there has been a period of inactivity that exceeds a pre-program time interval. For example, if no symbols have been scanned for ten minutes, then after this time period has elapsed, the reader enters a power-savings mode in which one or more of the imagers will be omitted from sequential energization. Alternatively, illumination levels may be reduced or turned off. At least one imager will remain active for periodically capturing images. If the active imager detects anything changing within its field of view, this will indicate to the operator that a product bearing a symbol is moving into the field of view, and illumination and image capture will resume to provide high performance scanning.

As previously stated, FIG. 2 is only a schematic representation of one type of imager-based reader as embodied in a bi-optical workstation. Other housings having different shapes, are also within the scope of this invention. For example, a handheld, portable reader having a gun-shaped housing is another advantageous configuration.

Each array should have a global shutter so that the captured images will not be disturbed by motion of the indicia relative to the window(s) during the exposure time period. The indicia can be presented or swiped at speeds up to around 100 inches per second across any part of either window. For an imager to be able to read an indicium that is moving rapidly, the indicium must be brightly illuminated by the illuminator 32 so that a short exposure time can be used. Bright illumination light shining out of either window can be annoying or uncomfortable to the operator, so the illumination light sources must not be directly viewable by the operator, or by a consumer standing nearby. A rolling or a mechanical shutter could also be employed.

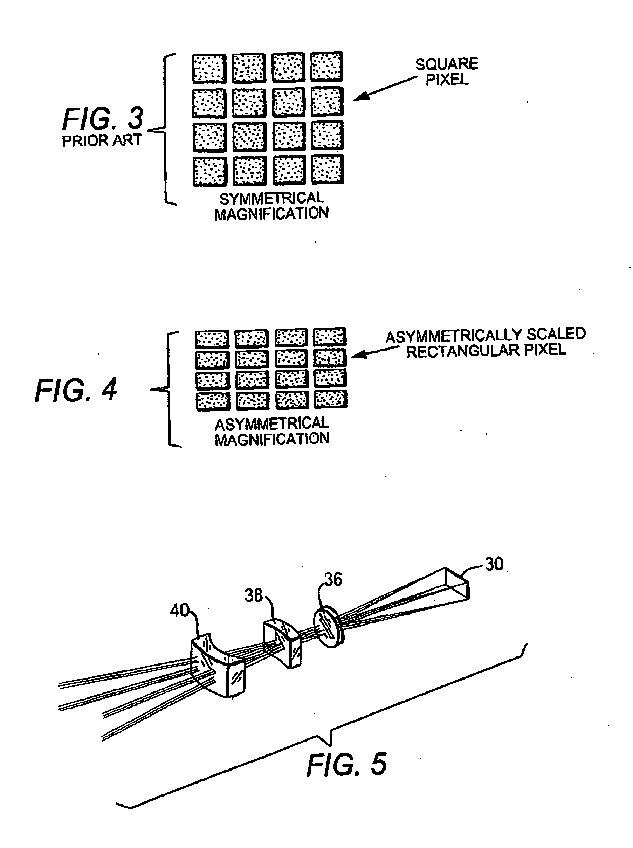

An aspect ratio of the field of view of an imager is normally the same as the aspect ratio of the pixel array. For example, if the array is 752 x 480 pixels, then the aspect ratio of the field of view is 752/480, or 1.56:1. Another unique and important aspect of this invention is that an optical converter is provided in the housing, for optically modifying and asymmetrically magnifying the field of view of the imager along mutually orthogonal directions generally perpendicular to an optical axis of the imager, to increase resolution of the imager along one of said directions. The optical converter includes non-rotationally symmetrical optical elements, as shown in FIGs. 5-6 and described in detail below, to modify the aspect ratio of the field of view of the imager.

In the prior art, an imager is normally associated with an optical system, such as a convex imaging lens, having a rotationally symmetrical magnification around the optical axis. In other words, the magnification along a horizontal axis is the same, or nearly the same due to optical distortion by the imaging lens, as along a vertical axis, as considered in a plane perpendicular to the optical axis. Magnification may vary with field angle, and an imaged symbol may appear with slightly different sizes if imaged on the optical axis versus off the optical axis. FIG. 3 depicts a 4 x 4 grid of square pixels of an image in which the magnification along the horizontal axis is the same, or nearly so, as the magnification along the vertical axis.

By contrast, an optical system with asymmetrical magnification, as shown in FIG. 4, has different magnifications along the horizontal and vertical axes. The rectangular pixels of the image appear stretched out along the horizontal axis or compressed along the vertical axis. The optical system with asymmetrical magnification improves the resolution of the imager, especially in those cases where the indicia is tilted with respect to the optical axis of the imager as in the case where the indicia is flat against the generally horizontal window or against the generally vertical window, or the indicia is on a surface that is generally perpendicular to either window. The modified field of view of the imager increases resolution along the 480 pixel axis (in the preferred embodiment), as compared to what it would have been if the field of view was unmodified.

FIG. 5 depicts the imager 30 and an imaging lens 36 with a symmetrical magnification along the horizontal and vertical axes. The symmetrical field of view is modified with a non-rotationally symmetrical field of view (FOV) converter, which consists of a set of toroidal lenses 38, 40. In a preferred embodiment, the magnification of the vertical FOV does not get modified by the FOV converter. Only the horizontal FOV is expanded. That allows use of cylindrical or aspherical cylindrical lenses, which are easier to fabricate than toroidal shapes.

The first lens 40 is an aspherical cylindrical lens with a negative optical power along the horizontal axis, and a zero optical power along the vertical axis. The second lens 38 is an aspherical cylindrical lens with a positive optical power along the horizontal axis, and a zero optical power along the vertical axis. Since the optical powers of both lenses 38 and 40 are zero along the vertical axis, the converter does not modify the vertical magnification. However, since the optical powers of both lenses 38 and 40 are not equal to zero along the horizontal axis and do not cancel each other out, the magnification of the horizontal FOV is changed. In other applications, the optical powers of the lenses can be reversed.

The lens 38 and 40 can be molded out of plastic, especially a red plastic to filter the red light only. This corrects the problem with inherited chromatic aberration of green and blue light. In other embodiments, the toroidal lenses 38, 40 can be integrated directly into the imaging lens 36 for a more compact design and cost reduction purpose.

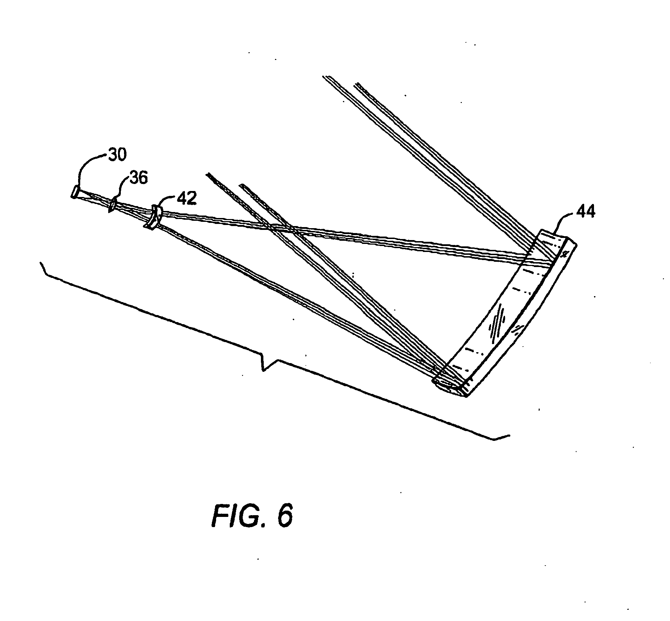

In another preferred embodiment, as shown in FIG. 6, a combination of a toroidal lens 42 and a torodial mirror 44 yields an optical system with an asymmetrical magnification. The FOV of the imaging lens 36 is modified with a combination of the FOV converter lens 42 and the mirror 44. The lens 42 is an aspherical cylindrical lens with a negative optical power, and the mirror 44 is located off the optical axis and is a concave aspherical mirror. The imaging lens 36 and the converter lens 42 are located in proximity of the focal point of the aspherical mirror 44.

The optical power of lens 42 and the optical power of the mirror 44 can be optimized in such a way as to yield a desired horizontal and vertical magnification. Lens 42 can be molded out of plastic. This system exhibits less chromatic aberration relatively to the two cylindrical lens design of FIG. 5 since lens 40 is replaced with the mirror 44, which never introduces chromatic aberration into the optical system. The FOV diverges slower after the mirror 44.

It will be understood that each of the elements described above, or two or more together, also may find a useful application in other types of constructions differing from the types described above.

While the invention has been illustrated and described as embodied in a point-of transaction workstation for electro-optically reading indicia by using imagers with asymmetrical magnification, it is not intended to be limited to the details shown, since various modifications and structural changes may be made without departing in any way from the present invention. For example, the magnification along the horizontal and vertical axes for a single imager can be reversed. The magnifications for plural imagers along one axis can be the same or different.

Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention and, therefore, such adaptations should and are intended to be comprehended within the meaning and range of equivalence of the following claims.

The invention is set forth in the appended claims.

## Claims

1. A reader for electro-optically reading indicia, comprising:
a housing having one window (12) located in a generally horizontal plane, and another window (16) located in a generally upright plane that intersects the generally horizontal plane;
a solid-state imager (30) within the housing, for capturing light along an optical axis of the solid-state imager from the indicia over a field of view through at least one of the windows (12,16), wherein the optical axis of the solid-state imager intersects the at least one of the windows (12,16) at an oblique angle and defines a first direction of the field of view and a second direction of the field of view both generally perpendicular to the optical axis of the solid-state imager, and wherein the first direction of the field of view and the second direction of the field of view are mutually orthogonal to each other with the first direction of the field of view being parallel to the at least one of the windows (12,16);
a controller (34) for controlling the imager (30) to produce an electrical signal indicative of the indicia being read, and for processing the electrical signal to read the indicia; **characterized by**
an optical converter (38,40;42,44) for optically modifying and asymmetrically magnifying the field of view along the mutually orthogonal first and second directions generally perpendicular to the optical axis of the solid-state imager with the magnification along the second direction of the field of view being reduced to be smaller than the magnification along the first direction of the field of view, and for increasing resolution of the imager along the second direction of the field of view.

2. The reader of claim 1, and another solid-state imager (30) within the housing, for capturing light along another optical axis from the indicia over another field of view through another of the windows.

3. The reader of claim 1, wherein the optical converter (38,40;42,44) comprises non-rotationally symmetrical optics for magnifying the field of view differently along said mutually orthogonal directions.

4. The reader of claim 3, wherein the non-rotationally symmetrical optics include at least one of a toroidal lens, a cylindrical lens, an aspherical toroidal lens, a toroidal mirror, a cylindrical mirror, and an aspherical toroidal mirror.

5. The reader of claim 3, wherein the non-rotationally symmetrical optics include a pair of lenses having respective positive and negative optical powers.

6. The reader of claim 3, wherein the non-rotationally symmetrical optics include at least one lens made of a plastic material that filters visible light in a predetermined frequency range and corrects for chromatic aberration of visible light in a different frequency range.

7. A method of electro-optically reading indicia, comprising the steps of:
configuring a housing with one window (12) located in a generally horizontal plane, and another window (16) located in a generally upright plane that intersects the generally horizontal plane;
capturing light from the indicia with a solid-state imager (30) along an optical axis of the solid-state imager over a field of view, wherein the optical axis of the solid-state imager intersects the at least one of the windows at an oblique angle and defines a first direction of the field of view and a second direction of the field of view both generally perpendicular to the optical axis of the solid-state imager, and wherein the first direction of the field of view and the second direction of the field of view are mutually orthogonal to each other with the first direction of the field of view being parallel to the at least one of the windows (12,16);
controlling the imager (30) to produce an electrical signal indicative of the indicia being read, and processing the electrical signal to read the indicia; **characterized by**
optically modifying and asymmetrically magnifying the field of view along the mutually orthogonal first and second directions generally perpendicular to the optical axis of the solid-state imager with the magnification along the second direction of the field of view being reduced to be smaller than the magnification along the first direction of the field of view, and increasing resolution of the imager (30) along the second direction of the field of view.

8. The method of claim 7, and focusing the light from the indicia onto the imager (30).

9. The method of claim 7, wherein the optically modifying step is performed by non-rotationally symmetrical optics that include at least one of a toroidal lens, a cylindrical lens, an aspherical toroidal lens, a toroidal mirror, a cylindrical mirror, and an aspherical toroidal mirror.

10. The method of claim 7, wherein the optically modifying step is performed by non-rotationally symmetrical optics that include a pair of lenses having respective positive and negative optical powers.

11. The method of claim 7, wherein the optically modifying step is performed by non-rotationally symmetrical optics that include at least one lens made of a plastic material that filters visible light in a predetermined frequency range and corrects for chromatic aberration of visible light in a different frequency range.

## Patentansprüche

1. Lesegerät zum elektro-optischen Lesen von Zeichen, das Folgendes umfasst:
ein Gehäuse mit einem Fenster (12), das in einer im Wesentlichen horizontalen Ebene angeordnet ist, und ein weiteres Fenster (16), das in einer im Wesentlichen aufrechten Ebene angeordnet ist, welche die im Wesentlichen horizontale Ebene schneidet;
eine Halbleiter-Bildaufnahmevorrichtung (30) innerhalb des Gehäuses zum Erfassen von Licht entlang einer optischen Achse der Halbleiter-Bildaufnahmevorrichtung von den Zeichen über ein Sichtfeld durch mindestens eines der Fenster (12, 16), wobei die optische Achse der Halbleiter-Bildaufnahmevorrichtung das mindestens eine der Fenster (12, 16) in einem schrägen Winkel schneidet und eine erste Richtung des Sichtfeldes und ein zweite Richtung des Sichtfeldes definiert, die beide im Wesentlichen senkrecht zur optischen Achse der Halbleiter-Bildaufnahmevorrichtung verlaufen, und wobei die erste Richtung des Sichtfeldes und die zweite Richtung des Sichtfeldes zueinander orthogonal verlaufen, wobei die erste Richtung des Sichtfeldes parallel zu dem mindestens einen der Fenster (12, 16) verläuft;
eine Steuereinheit (34) zum Steuern der Bildaufnahmevorrichtung (30), um ein elektrisches Signal zu erzeugen, das für die zu lesenden Zeichen steht, und zum Verarbeiten des elektrischen Signals, um die Zeichen zu lesen; **gekennzeichnet durch**:
einen optischen Wandler (38, 40; 42, 44) zum optischen Modifizieren und asymmetrischen Vergrößern des Sichtfeldes entlang der zueinander orthogonalen ersten und zweiten Richtungen im Wesentlichen senkrecht zur optischen Achse der Halbleiter-Bildaufnahmevorrichtung, wobei die Vergrößerung entlang der zweiten Richtung des Sichtfeldes so verringert wird, dass sie kleiner als die Vergrößerung entlang der ersten Richtung des Sichtfeldes ist, und zum Erhöhen der Auflösung der Bildaufnahmevorrichtung entlang der zweiten Richtung des Sichtfeldes.

2. Lesegerät nach Anspruch 1, und eine weitere Halbleiter-Bildaufnahmevorrichtung (30) innerhalb des Gehäuses zum Erfassen von Licht entlang einer weiteren optischen Achse von den Zeichen über ein weiteres Sichtfeld durch ein weiteres der Fenster.

3. Lesegerät nach Anspruch 1, wobei der optische Wandler (38, 40; 42, 44) eine nicht-rotationssymmetrische Optik zum unterschiedlichen Vergrößern des Sichtfeldes entlang der zueinander orthogonalen Richtungen umfasst.

4. Lesegerät nach Anspruch 3, wobei die nicht-rotationssymmetrische Optik mindestens eines von Folgendem enthält: eine torische Linse, eine Zylinderlinse, eine asphärische torische Linse, einen torischen Spiegel, einen zylindrischen Spiegel und einen asphärischen torischen Spiegel.

5. Lesegerät nach Anspruch 3, wobei die nicht-rotationssymmetrische Optik ein Linsen-Paar mit jeweils positiver und negativer optischer Wirkung enthält.

6. Lesegerät nach Anspruch 3, wobei die nicht-rotationssymmetrische Optik mindestens eine Linse enthält, die aus einem Kunststoffmaterial besteht, das sichtbares Licht in einem vorgegebenen Frequenzbereich filtert und eine chromatische Aberration von sichtbarem Licht in einem anderen Frequenzbereich korrigiert.

7. Verfahren zum elektro-optischen Lesen von Zeichen, das folgende Schritte umfasst:
Konfigurierten eines Gehäuses mit einem Fenster (12), das in einer im Wesentlichen horizontalen Ebene angeordnet ist, und einem weiteren Fenster (16), das in einer im Wesentlichen aufrechten Ebene angeordnet ist, welche die im Wesentlichen horizontale Ebene schneidet;
Erfassen von Licht von den Zeichen mit einer Halbleiter-Bildaufnahmevorrichtung (30) entlang einer optischen Achse der Halbleiter-Bildaufnahmevorrichtung über ein Sichtfeld, wobei die optische Achse der Halbleiter-Bildaufnahmevorrichtung das mindestens eine der Fenster in einem schrägen Winkel schneidet und eine erste Richtung des Sichtfeldes und eine zweite Richtung des Sichtfeldes definiert, die beide im Wesentlichen senkrecht zur optischen Achse der Halbleiter-Bildaufnahmevorrichtung verlaufen, und wobei die erste Richtung des Sichtfeldes und die zweite Richtung des Sichtfeldes zueinander orthogonal verlaufen, wobei die erste Richtung des Sichtfeldes parallel zu dem mindestens einen der Fenster (12, 16) verläuft;
Steuern der Bildaufnahmevorrichtung (30) so, dass ein elektrisches Signal erzeugt wird, das für die zu lesenden Zeichen steht, und Verarbeiten des elektrischen Signals, um die Zeichen zu lesen; **gekennzeichnet durch**
optisches Modifizieren und asymmetrisches Vergrößern des Sichtfeldes entlang der zueinander orthogonalen ersten und zweiten Richtungen im Wesentlichen senkrecht zur optischen Achse der Halbleiter-Bildaufnahmevorrichtung, wobei die Vergrößerung entlang der zweiten Richtung des Sichtfeldes so verringert wird, dass sie kleiner als die Vergrößerung entlang der ersten Richtung des Sichtfeldes ist, und Erhöhen der Auflösung der Bildaufnahmevorrichtung (30) entlang der zweiten Richtung des Sichtfeldes.

8. Verfahren nach Anspruch 7, und Fokussieren des Lichts von den Zeichen auf die Bildaufnahmevorrichtung (30).

9. Verfahren nach Anspruch 7, wobei der Schritt des optischen Modifizierens durch eine nicht-rotationssymmetrische Optik ausgeführt wird, die mindestens eines von Folgendem aufweist: eine torische Linse, eine Zylinderlinse, eine asphärische torische Linse, einen torischen Spiegel, einen zylindrischen Spiegel und einen asphärischen torischen Spiegel.

10. Verfahren nach Anspruch 7, wobei der Schritt des optischen Modifizierens durch eine nicht-rotationssymmetrische Optik ausgeführt wird, die ein Linsen-Paar mit jeweils positiver und negativer optischer Wirkung enthält.

11. Verfahren nach Anspruch 7, wobei der Schritt des optischen Modifizierens durch eine nicht-rotationssymmetrische Optik ausgeführt wird, die mindestens eine Linse enthält, die aus einem Kunststoffmaterial besteht, das sichtbares Licht in einem vorgegebenen Frequenzbereich filtert und eine chromatische Aberration von sichtbarem Licht in einem anderen Frequenzbereich korrigiert.

## Revendications

1. Lecteur pour lire des indices de manière électro-optique, comprenant :
un boîtier ayant une fenêtre (12) positionnée dans un plan généralement horizontal, et une autre fenêtre (16) positionnée dans un plan généralement vertical qui coupe le plan généralement horizontal,
un dispositif d'imagerie à l'état solide (30) contenu dans le boîtier, pour capturer de la lumière le long d'un axe optique du dispositif d'imagerie à l'état solide à partir des indices sur un champ de vision à travers au moins l'une des fenêtres (12, 16),
dans lequel l'axe optique du dispositif d'imagerie à l'état solide coupe la au moins une des fenêtres (12, 16) à un angle oblique et définit une première direction du champ de vision et une seconde direction du champ de vision les deux étant généralement perpendiculaires à l'axe optique du dispositif d'imagerie à l'état solide, et dans lequel la première direction du champ de vision et la seconde direction du champ de vision sont mutuellement orthogonales entre elles, la première direction du champ de vision étant parallèle à la au moins une des fenêtres (12, 16),
un dispositif de commande (34) pour commander le dispositif d'imagerie (30) afin de produire un signal électrique indicatif des indices étant lus, et pour traiter le signal électrique afin de lire les indices, **caractérisé par**
un convertisseur optique (38, 40 ; 42, 44) pour modifier optiquement et grossir de manière asymétrique le champ de vision le long des première et seconde directions mutuellement orthogonales généralement perpendiculaires à l'axe optique du dispositif d'imagerie à l'état solide, le grossissement le long de la seconde direction du champ de vision étant réduit de manière à être inférieur au grossissement le long de la première direction du champ de vision, et pour augmenter la résolution du dispositif d'imagerie le long de la seconde direction du champ de vision.

2. Lecteur selon la revendication 1, et un autre dispositif d'imagerie à l'état solide (30) contenu dans le boîtier, pour capturer de la lumière le long d'un autre axe optique à partir des indices sur un autre champ de vision à travers une autre des fenêtres.

3. Lecteur selon la revendication 1, dans lequel le convertisseur optique (38, 40 ; 42, 44) comporte une unité optique symétrique non rotationnelle pour grossir le champ de vision différemment le long desdites directions mutuellement orthogonales.

4. Lecteur selon la revendication 3, dans lequel l'unité optique symétrique non rotationnelle inclut au moins l'une d'une lentille toroïdale, d'une lentille cylindrique, d'une lentille toroïdale asphérique, d'un miroir toroïdal, d'un miroir cylindrique, et d'un miroir toroïdal asphérique.

5. Lecteur selon la revendication 3, dans lequel l'unité optique symétrique non rotationnelle inclut une paire de lentilles ayant des puissances optiques positive et négative respectives.

6. Lecteur selon la revendication 3, dans lequel l'unité optique symétrique non rotationnelle inclut au moins une lentille constituée d'un matériau en matière plastique qui filtre de la lumière visible dans une plage de fréquences prédéterminée et corrige l'aberration chromatique de lumière visible dans une plage de fréquences différente.

7. Procédé de lecture d'indices de manière électro-optique, comprenant les étapes consistant à :
configurer un boîtier ayant une fenêtre (12) positionnée dans un plan généralement horizontal, et une autre fenêtre (16) positionnée dans un plan généralement vertical qui coupe le plan généralement horizontal,
capturer de la lumière en provenance des indices à l'aide d'un dispositif d'imagerie à l'état solide (30) le long d'un axe optique du dispositif d'imagerie à l'état solide sur un champ de vision, dans lequel l'axe optique du dispositif d'imagerie à l'état solide coupe la au moins une des fenêtres à un angle oblique et définit une première direction du champ de vision et une seconde direction du champ de vision les deux étant généralement perpendiculaires à l'axe optique du dispositif d'imagerie à l'état solide, et dans lequel la première direction du champ de vision et la seconde direction du champ de vision sont mutuellement orthogonales entre elles, la première direction du champ de vision étant parallèle à la au moins une des fenêtres (12, 16),
commander le dispositif d'imagerie (30) afin de produire un signal électrique indicatif des indices étant lus, et traiter le signal électrique afin de lire les indices, **caractérisé par**
la modification de manière optique et le grossissement de manière asymétrique du champ de vision le long des première et seconde directions mutuellement orthogonales généralement perpendiculaires à l'axe optique du dispositif d'imagerie à l'état solide, le grossissement le long de la seconde direction du champ de vision étant réduit de manière à être inférieur au grossissement le long de la première direction du champ de vision, et l'augmentation de la résolution du dispositif d'imagerie (30) le long de la seconde direction du champ de vision.

8. Procédé selon la revendication 7, et concentrant la lumière provenant des indices sur le dispositif d'imagerie (30).

9. Procédé selon la revendication 7, dans lequel l'étape de modification de manière optique est exécutée par une unité optique symétrique non rotationnelle qui inclut au moins l'une d'une lentille toroïdale, d'une lentille cylindrique, d'une lentille toroïdale asphérique, d'un miroir cylindrique, et d'un miroir toroïdal asphérique.

10. Procédé selon la revendication 7, dans lequel l'étape de modification de manière optique est exécutée par l'intermédiaire d'une unité optique symétrique non rotationnelle qui inclut une paire de lentilles ayant des puissances optiques positive et négative respectives.

11. Procédé selon la revendication 7, dans lequel l'étape de modification de manière optique est exécutée par l'intermédiaire d'une unité optique symétrique non rotationnelle qui inclut au moins une lentille constituée d'un matériau en matière plastique qui filtre la lumière visible dans une plage de fréquences prédéterminée et corrige une aberration chromatique de lumière visible dans une plage de fréquences différente.
